# EUROPEAN PATENT APPLICATION

(11) **EP 1 859 992 A1**
(43) Date of publication of application: **28.11.2007**
(21) Application number: 07010080.5
(22) Date of filing: 21.05.2007
(51) Int. Cl.: B60Q 1/14, B60K 37/06, H03K 17/96, H01H 13/70

(54) **Switch device and steering switch device using the same**

(30) Priority: 23.05.2006 JP 2006142960
(71) Applicant: ALPS ELECTRIC CO., LTD., Tokyo 145-8501 (JP)
(72) Inventor: Onodera, Mikio c/o Alps Electric Co., Ltd., Tokyo 145-8501 (JP); Shibazaki, Ken c/o Alps Electric Co., Ltd., Tokyo 145-8501 (JP)
(74) Representative: Klunker . Schmitt-Nilson . Hirsch

(57) **Abstract**

A switch device includes an operation plate (12) that has regions which an operator contacts with fingers so as to perform a switching operation, a wiring film (13) that has a plurality of capacitive touch switches (24a,25a,26a,27a) that are provided to correspond to the regions on a back surface of the operation plate (12), supporting portions and a holding portion that rotatably support a holder (29) holding the operation plate (12), such that one end of the operation plate (12) rocks when operation surfaces (24b,25b,26b,27b) are pressed, and a pushbutton switch (30) that comes into contact with and operates in response to the holder (29) rocking when the operation plate (12) is pressed, and outputs pressing signals fixing input of the capacitive touch switches (24a,25a,26a,27a) corresponding to the operation surfaces (24b,25b,26b,27b) that come into contact with the fingers of the operator.

## Description

This application claims the benefit of Japanese Patent Application No. 2006-142960 filed on May 23, 2006 which is hereby incorporated by reference.

### BACKGROUND OF THE INVENTION

### 1. Field of the Invention

The present invention relates to a switch device capable of inputting instructions that are associated with various operations of on-vehicle equipment, and a steering switch device using the same.

### 2. Description of the Related Art

A steering switch device according to the related art is disclosed in JP-A-2005-138787. In the steering switch device according to the related art, a plurality of switches are disposed along the periphery of a pad portion, such that a driver can perform a pressing operation while grasping a steering wheel with hands so as to control various electronic apparatuses mounted in a vehicle.

In recent years, steering switch devices, on which a plurality of switches are mounted, have been required. As a result, the sizes and costs of the steering switch devices are increased.

### SUMMARY OF THE INVENTION

The invention has been finalized in view of the drawbacks inherent in the conventional switch device and steering device, and it is an object of the invention to provide a switch device capable of preventing the size and cost of the switch device from increasing even though a plurality of switches are mounted, and a steering switch device using the same.

In order to achieve the above-described objects, according to an aspect of the invention, a switch device includes an operation plate that has a plurality of operation surfaces which an operator contacts fingers with so as to perform a switching operation, a wiring body that has a plurality of capacitive touch switches, the plurality of capacitive touch switches provided to correspond to the plurality of operation surfaces on a back surface of the operation plate, sensing that the operation surfaces come into contact with the fingers of the operator, and outputting contact signals, a rocking supporting mechanism that rotatably supports the operation plate or a holder holding the operation plate at one end side of the operation plate, such that the other end of the operation plate rocks when the operation surfaces are pressed, and a pushbutton switch that comes into contact with and operates in response to the operation plate rocking when the operation surfaces are pressed or the holder, and outputs pressing signals fixing input of the capacitive touch switches corresponding to the operation surfaces that come into contact with the fingers of the operator.

According to this structure, one wiring body including the plurality of capacitive touch switches and one pressing switch can constitute the switch device. Therefore, it is possible to achieve a switch device having a small size and low cost, even when the number of switches is increased. Further, since a switch structure is simple, an arrangement space can be easily ensured, and a degree of freedom in design can be increased.

Preferably, grooves or protrusions, which partition the plurality of operation surfaces, are provided on the operation plate, and concave portions or convex portions are provided so as to discriminate the plurality of operation surfaces among the grooves or the protrusions.

According to this structure, it is possible to discriminate an operation surface of the plurality of operation surfaces which the finger of the operator comes in contact with. Therefore, it is possible to perform a blind touch operation.

Preferably, an external force applying unit that applies an external force to the plurality of operation surfaces is provided in the operation plate or the holder.

According to this structure, since it is possible to stimulate a tactile sensation of the finger that comes into contact with the operation surface, the operator can know an operation surface on which the touch switch is turned on, and can surely perform a blind touch operation.

Preferably, the operation plate and the wiring body are made of a light transmitting material, the holder has a plurality of tubular cavity portions that are made of a light shielding material and face the plurality of operation surfaces, and light emitting elements are provided to face the plurality of tubular cavity portions.

According to this case, since the operation surface that comes into contact with the finger is only illuminated, even when the operator does not experience a blind touch operation or performs an operation in a dark state, the operator can visually recognize an operation surface on which the touch switch is turned on.

Preferably, the switch device according to the aspect of the invention further includes a control unit that receives the contact signals and/or the pressing signals and outputs control signals or instruction signals. When the control unit receives the contact signals, the control unit outputs control signals to operate the external force applying unit, and when the control unit receives the pressing signals, the control unit outputs instruction signals to fix input of the touch switches corresponding to the operation surfaces coming into contact with the fingers of the operator.

According to this case, it is possible to achieve a switch device that has a simplified structure and enables an operation to be surely performed.

Preferably, the switch device according to the aspect of the invention further includes further includes a control unit that receives the contact signals and/or the pressing signals and outputs control signals or instruction signals. When the control unit receives the contact signals, the control unit outputs to the light emitting elements, control signals making the light emitting elements emit light, and when the control unit receives the pressing signals, the control unit outputs instruction signals to fix input of the touch switches corresponding to the operation surfaces coming into contact with the fingers of the operator.

According to this case, it is possible to achieve a switch device that has a simplified structure and enables an operation to be surely performed.

According to another aspect of the invention, there is provided a steering switch device. The switch device according to the aspect of the invention is used as the steering switch device and is provided in a steering wheel. The steering wheel includes a pad portion and grasping portions that extend from the pad portion and have openings formed between the pad portion and the grasping portions. The rocking supporting mechanism is provided at the pad portion side such that the operation plate at the grasping portion side rocks on the basis of the pad portion side.

According to this structure, since one wiring body and one pressing switch can constitute a switch device, it is possible to achieve a steering switch device having a small size and low cost, even when the number of switches is increased. Further, since the operation plate including the plurality of capacitive touch switches is used, it is possible to achieve a steering switch device that is suitable for various designs of a steering wheel having a three-dimensional curved surface. Further, since the operator presses the portion close to the opening on each operation surface with the finger, a blind touch operation, a slide operation over a plurality of operation surfaces, and an operation plate pressing operation can be easily performed by the fingers of a hand grasping the grasping portions. Therefore, it is possible to improve operability.

Preferably, the rocking supporting mechanism includes a pair of flexible holding portions that are provided in the pad portion and a pair of supporting portions that are provided in the holder. Preferably, shafts or holes provided in the holding portions engage with holes or shafts provided in the supporting portions to freely rotate.

According to this structure, it is possible to achieve a steering switch device that can be easily assembled.

As described above, according to the aspects of the invention, it is possible to achieve a switch device and a steering switch device that are capable of reducing the size and cost even when the number of switches is increased. Further, since a switch structure is simple, arrangement spaces of the switch device and the steering switch device can be easily ensured, and a degree of freedom in design can be improved.

### BRIEF DESCRIPTION OF THE DRAWINGS

Fig. 1 is a plan view illustrating a state where a switch device according to an embodiment of the invention is attached to a steering wheel as a steering switch device;
Fig. 2 is an exploded perspective view of a right switch device shown in Fig. 1;
Fig. 3 is a perspective view illustrating a right side of the right switch device shown in Fig. 1;
Fig. 4 is a perspective view illustrating a left side of the right switch device shown in Fig. 1;
Fig. 5 is an enlarged plan view of a wiring body shown in Fig. 2;
Fig. 6 is a cross-sectional view taken along the line VI-VI of Fig. 1;
Fig. 7 is a cross-sectional view taken along the line VII-VII of Fig. 1;
Fig. 8 is a cross-sectional view illustrating a state where an operation plate is pressed, which corresponds to Fig. 7;
Fig. 9 is a diagram illustrating a system structure of the switch device shown in Fig. 1;
Fig. 10 is a diagram illustrating an example of operation items of an air conditioner that are assigned to each touch input operation unit of a left switch device shown in Fig. 1; and
Fig. 11 is a diagram illustrating an example of operation items of audio equipment that are assigned to each touch input operation unit of the right switch device shown in Fig. 1.

### DESCRIPTION OF THE PREFERRED EMBODIMENT

An on-vehicle input device according to an embodiment of the invention will be described with reference to the accompanying drawings.

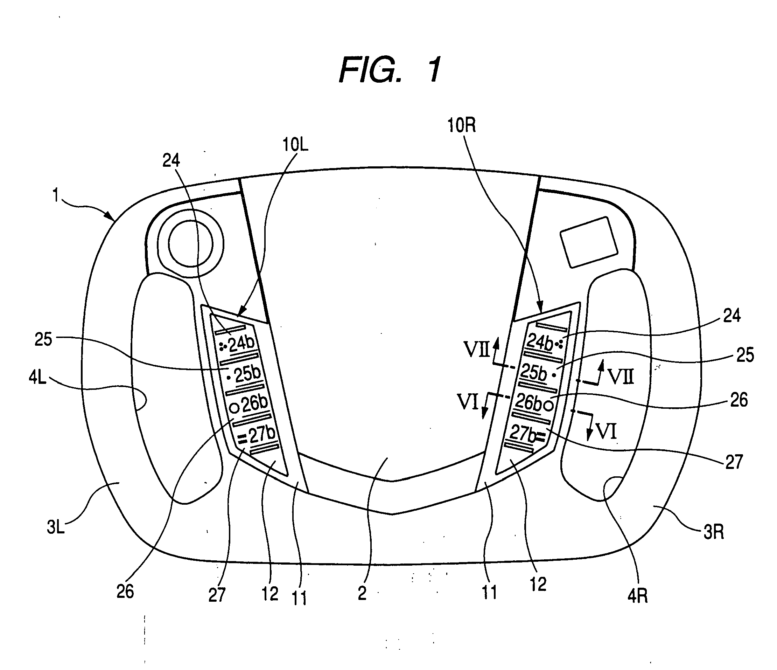

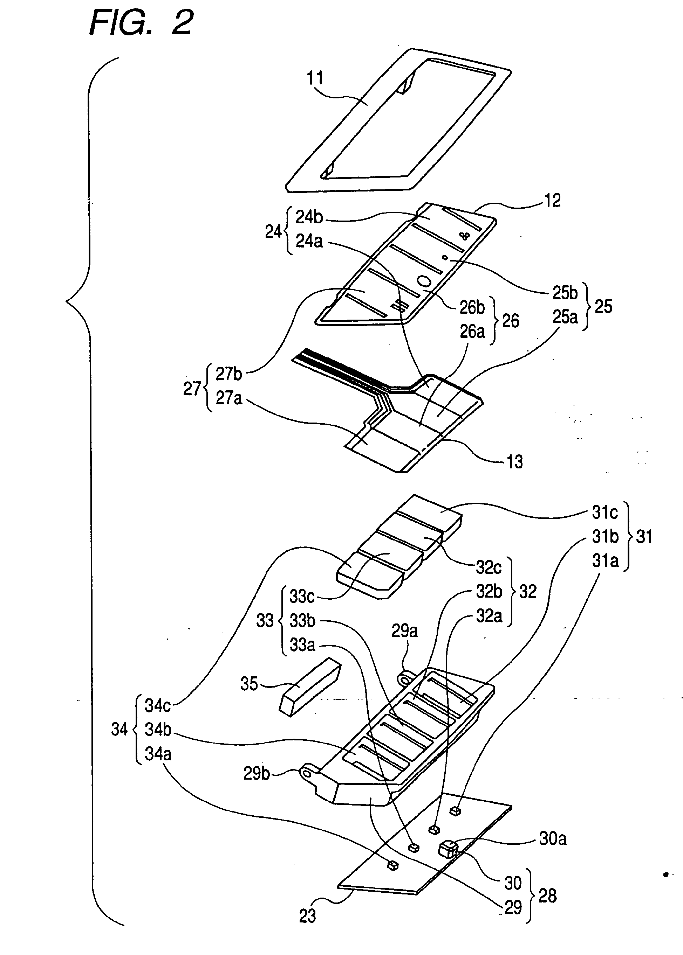

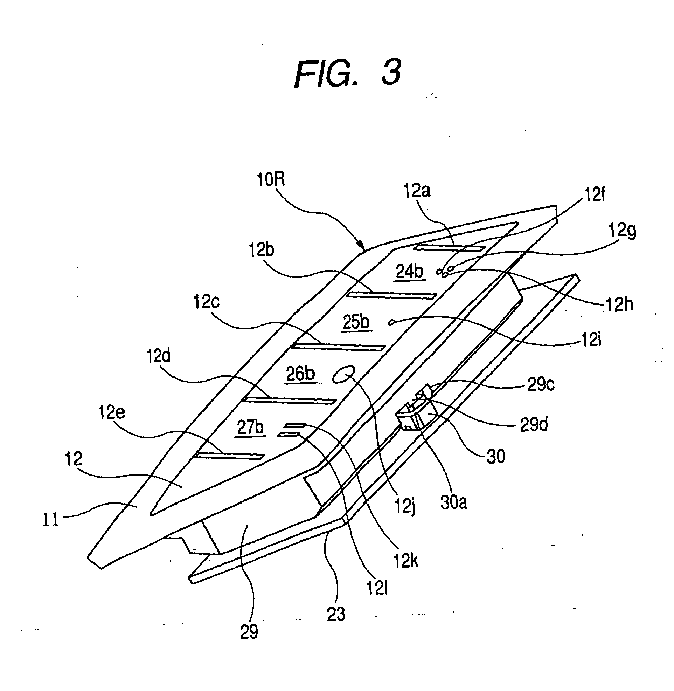

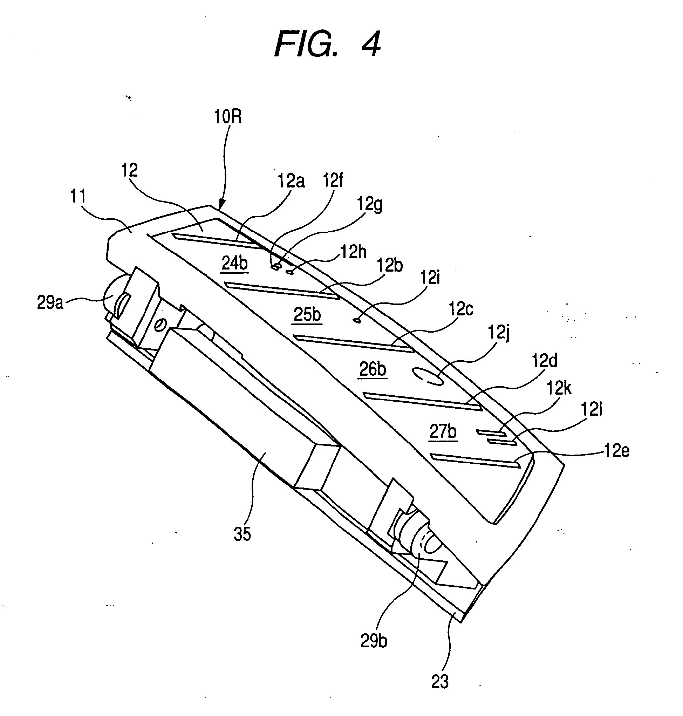

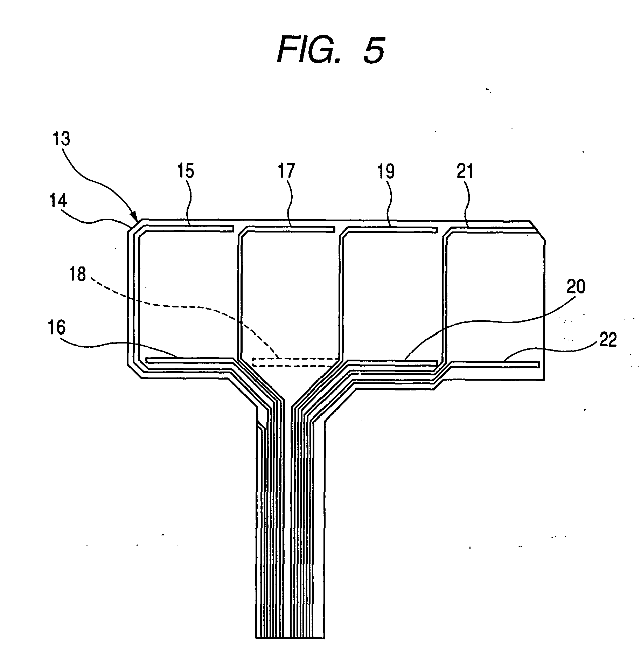

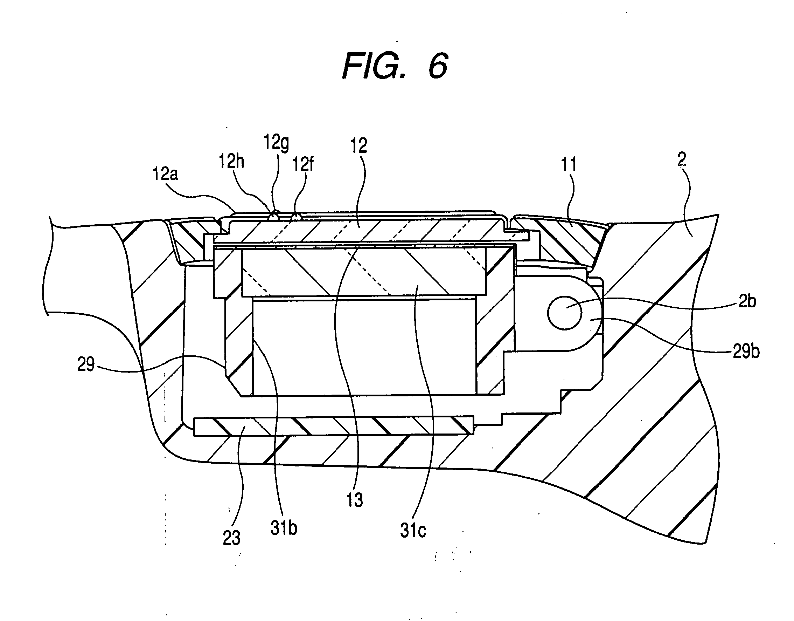

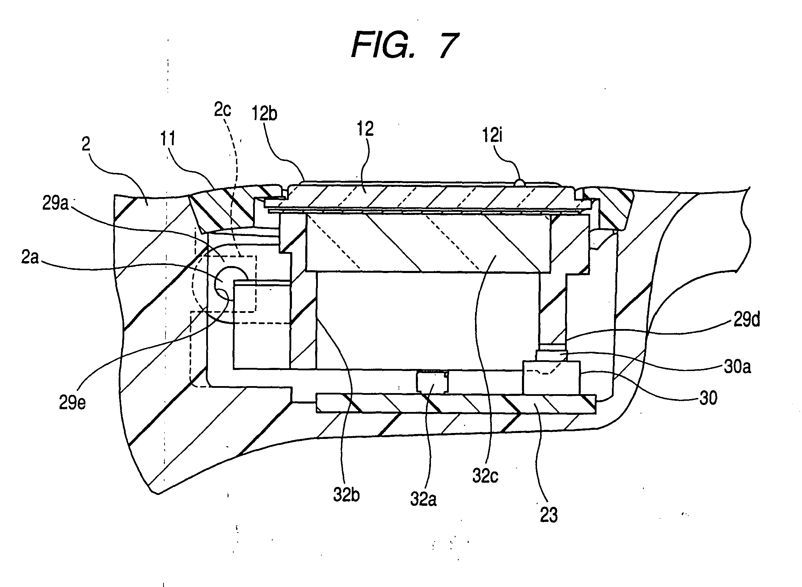

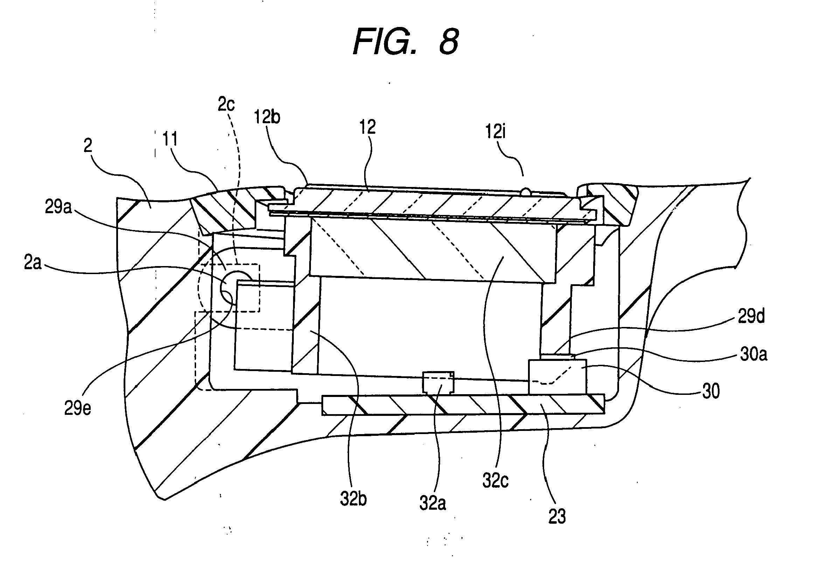

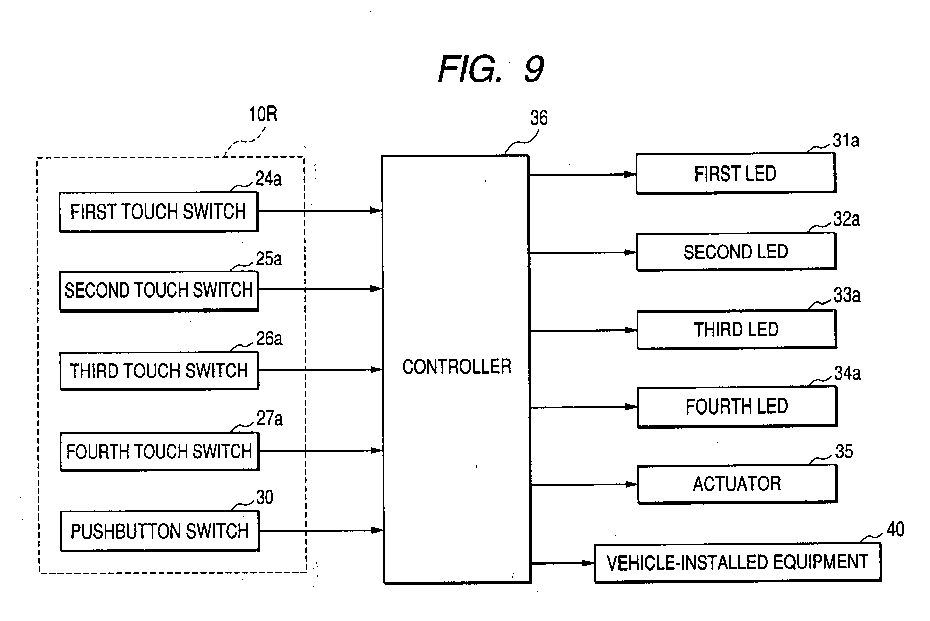

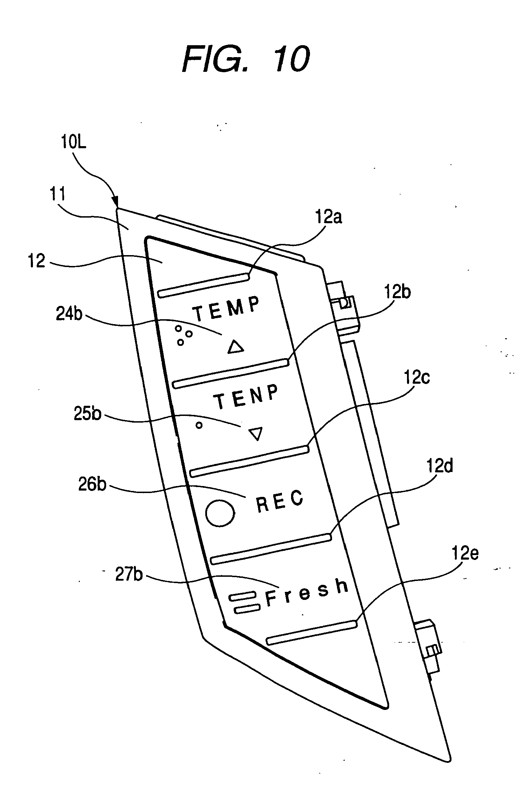

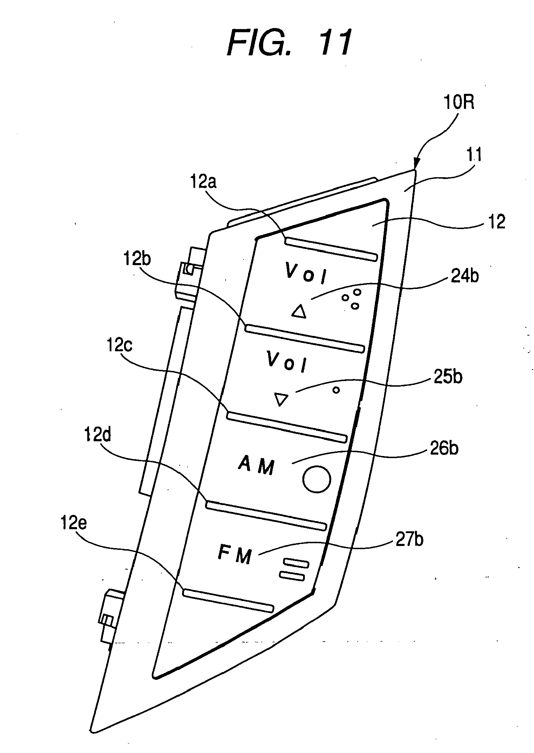

Fig. 1 is a plan view illustrating a state where a switch device according to an embodiment of the invention is attached to a steering wheel as a steering switch device. Fig. 2 is an exploded perspective view of a right switch device shown in Fig. 1. Fig. 3 is a perspective view illustrating a right side of the right switch device shown in Fig. 1. Fig. 4 is a perspective view illustrating a left side of the right switch device shown in Fig. 1. Fig. 5 is an enlarged plan view of a wiring body shown in Fig. 2. Fig. 6 is a cross-sectional view taken along the line VI-VI of Fig. 1. Fig. 7 is a cross-sectional view taken along the line VII-VII of Fig. 1. Fig. 8 is a cross-sectional view illustrating a state where an operation plate is pressed, which corresponds to Fig. 7. Fig. 9 is a diagram illustrating a system structure of the switch device shown in Fig. 1. Fig. 10 is a diagram illustrating an example of operation items of an air conditioner that are assigned to each touch input operation unit of a left switch device shown in Fig. 1. Fig. 11 is a diagram illustrating an example of operation items of audio equipment that are assigned to each touch input operation unit of the right switch device shown in Fig. 1.

In this embodiment, as shown in Fig. 1, a steering wheel 1 includes operation devices 10L and 10R that are respectively attached to left and right sides of a pad portion 2 formed at the center of the steering wheel 1. At a left side of the left operation device 10L and a right side of the right operation device 10R, grasping portions 3L and 3R extend from the pad portion 2, respectively. Openings 4L and 4R are provided between the pad portion 2 and the grasping portions 3L and 3R such that fingers of a driver grasping the grasping portions 3L and 3R are inserted therein.

The operation devices 10L and 10R have the same structure and are bilaterally symmetric with the pad portion 2 interposed therebetween. Next, the structures of the operation devices 10L and 10R will be described by exemplifying the right operation device 10R.

As shown in Fig. 2, the operation device 10R includes an operation plate 12 that is made of a resin molded plate having a light transmitting property, a frame-shaped bezel 11 that is attached to the steering wheel 1 in a state where the frame-shaped bezel 11 overlaps a peripheral portion of the operation plate 12, first to fourth touch switches 24a to 27a that function as a plurality of touch switches, and a wiring film 13 that functions as a wiring body where the touch switches are provided. Each of the first to fourth touch switches 24a to 27a is composed of a touch switch that can sense a state where a skin of the human body is in proximity to the switch, for example, a capacitive touch switch. The wiring film 13 is made of a light transmitting material. As shown in Fig. 5, patterns of electrodes 15 to 22 that form the first to fourth touch switches 24a to 27a are printed on a PET-made film 14. As shown in Fig. 2, the wiring film 13 overlaps a back surface of the operation plate 12.

As shown in Figs. 2 to 4, a plurality of elongated protrusions as protrusions, that is, first to fifth elongated protrusions 12a to 12e are formed on a top surface of the operation plate 12. A first region 24b that functions as an operation surface on the operation plate 12 is formed between the first elongated protrusion 12a and the second elongated protrusion 12b, and is disposed on the first touch switch 24a. In the same manner, a second region 25b is formed between the second elongated protrusion 12b and the third elongated protrusion 12c and is disposed on the second touch switch 25a. A third region 26b is formed between the third elongated protrusion 12c and the fourth elongated protrusion 12d and is disposed on the third touch switch 26a. A fourth region 27b is formed between the fourth elongated protrusion 12d and the fifth elongated protrusion 12e and is disposed on the fourth touch switch 27a. Further, since the first to fifth elongated protrusions 12a to 12e are provided to partition the first to fourth regions 24b to 27b, the first to fifth elongated protrusions 12a to 12e may be changed to elongated grooves as grooves.

That is, in the operation device 10R, the first to fourth regions 24b to 27b that come into contact with the fingers of the operator are provided on the operation plate 12. On the back surface of the operation plate 12, the first to fourth touch switches 24a to 27a are provided on the wiring film 13 so as to correspond to the first to fourth regions 24b to 27b. Therefore, if the operator contacts his finger with an operation surface, one of the first to fourth touch switches 24a to 27a that corresponds to the operation surface senses that the operator contacts the finger with the operation surface, and outputs a contact signal.

As shown in Figs. 3 and 4, three protrusions 12f, 12g, and 12h, which are coupled to one another like convexes of a regular triangle and have the same size, are formed on the top surface of the operation plate 12 in the first region 24b. One protrusion 12i, which has the same size as the protrusion 12f or the like, is formed on the top surface of the operation plate 12 in the second region 25b. A large protrusion 12j, which is lager than the protrusion 12f, is formed on a top surface of the operation plate 12 in the third region 26b. On a top surface of the operation plate 12 in the fourth region 27b, two elongated protrusions 12k and 121, which are shorter than the first to fifth elongated protrusions 12a to 12e, are formed in parallel to each other. The protrusions 12f to 121 are formed to discriminate the operation surfaces that are partitioned by the first to fifth elongated protrusions 12a to 12e, that is, the first to fourth regions 24b to 27b. Therefore, instead of the protrusions 12f to 121, it is possible to use portions that are formed by appropriately combining concave portions or convex portions.

As shown in Fig. 2, the operation device 10R includes a wiring board 23. On the wiring board 23, a pushbutton switch 30 is provided. A holder 29 that holds the operation plate 12 is disposed on the wiring board 23.

The holder 29 is made of a light shielding material. The holder 29 is provided integrally with the operation plate 12 to be fixed in a state where the wiring film 13 is interposed between the holder 29 and the operation plate 12. For example, the operation plate 12 and the wiring film 13 are bonded to each other, and the wiring film 13 and the holder 29 are bonded to each other. Further, holes 29e and 29f are formed in a pair of supporting portions 29a and 29b of the holder 29. Shafts 2a and 2b are formed in a pair of holding portions 2c and 2d that are provided in the pad portion 2 and are flexible. The holes 29e and 29f engage with the shafts 2a and 2b such that the shafts freely rotate. As such, the holder 29 is supported such that the holding portion 10R can rock on the basis of the central side of the steering wheel 1, that is, the side of the pad portion 2 (see Figs. 6 and 7). The supporting portions 29a and 29b and the holding portions 2c and 2d form a rocking supporting mechanism that supports the holder 29 to freely rotate. Further, in a structure that supports the holder 29 to the pad portion 2 to freely rock, a rocking shaft may be provided in the holder 29, and a bearing may be provided in the pad portion 2.

As shown in Fig. 3, a cut-out portion 29c is formed at the left side of the holder 29, and a protrusion 29d is formed at the center of a bottom side of the cut-out portion 29c. A rocking trace of the protrusion 29d of when the holder 29 rocks in a direction of the wiring board 23 (downward) is set to include a pressing operation portion 30a of the pushbutton switch 30 that functions as a pressing switch provided on the wiring board 23. That is, when the holder 29 rocks in a direction of the wiring board 23, the pushbutton switch 30 is pressed by the protrusion 29d of the holder 29 (see Fig. 8). In this case, a duct switch that activates a clicking sensation or a rubber switch having a rubber contact may be suitable for the pushbutton switch 30.

That is, the operation device 10R is provided with the first to fourth touch input operation units 24 to 27 and includes a pressing input operation unit 28 that includes the holder 29 that functions as the operation plate 12, that is, an operation member supported such that displacement is possible in a direction crossing a direction in which operation surfaces of the first to fourth touch input operation units 24 to 27 are arranged, and the pushbutton switch 30 functioning as a pressing switch that is pressed by the operation member displaced by pressing the operation surfaces of the first to fourth touch input operation units 24 to 27 and outputs a pressing signal. In this case, the first to fourth touch input operation units 24 to 27 indicate the first to fourth regions 24b to 27b functioning as the operation surfaces, and the first to fourth touch switches 24a to 27a. Further, the pressing input operation unit 28 indicates the holder 29 and the pushbutton switch 30.

As shown in Fig. 2, the wiring board 23 is provided with four light emitting elements functioning as light sources for illumination in the operation device 10R, that is, first to fourth LEDs 31a to 34a. The holder 29 is provided with first to fourth tubular cavity portions 31b to 34b that guide light emitted from the first to fourth LEDs 31a to 34a to the operation plate 12 in directions of the first to fourth touch input operation units 24 to 27. Each of the first to fourth LEDs 31a to 34a illuminate only a region (operation surface) that comes into contact with the finger of the operator. In openings of the first to fourth tubular cavity portions 31b to 34b at the wiring film 13 side, first to fourth light diffusing members 31c to 34c are fitted so as to uniformly illuminate the regions with the light emitted from the first to fourth LEDs 31a to 34a (see Fig. 7).

That is, the operation device 10R includes a first illuminating unit 31 that is composed of the first LED 31a, the first tubular cavity portion 31b, and the first light diffusing member 31c, a second illuminating unit 32 that is composed of the second LED 32a, the second tubular cavity portion 32b, and the second light diffusing member 32c, a third illuminating unit 33 that is composed of the third LED 33a, the third tubular cavity portion 33b, and the third light diffusing member 33c, and a fourth illuminating unit 34 that is composed of the fourth LED 34a, the fourth tubular cavity portion 34b, and the fourth light diffusing member 34c.

As shown in Figs. 2 and 4, an actuator 35, which functions as an external force applying unit that is capable of applying an external force, such as vibration, to the operation plate 12, is disposed on the surface of the holder 29 at the rotational center of the steering wheel, and is fixedly attached to the holder 29 by means of a two-sided tape. The actuator 35 has a solenoid incorporated therein, and can be electrically controlled. The force that is generated by the actuator 35 is transmitted to the operation plate 12 through the holder 29, and stimulates a tactile sensation of the fingers of the operator that come into contact with the first to fourth regions 24b to 27b (operation surfaces). According to this structure, since it is possible to stimulate the tactile sensation of the fingers of the operator that come into contact with the first to fourth regions 24b to 27b, the operator can surely perform a blind touch operation through which the operator can recognize a region of the first to fourth regions 24b to 27b on which a touch switch is turned on.

As shown in Fig. 9, the switch device according to this embodiment includes a controller 36 functioning as a control unit that outputs an instruction signal to the on-vehicle equipment 40 in accordance with a contact signal or a pressing signal from the operation devices 10L and 10R. The controller 36 is provided in an installment panel (not shown). Since the relationship between the operation device 10R and the controller 36 is the same as the relationship between the operation device 10L and the controller 36, the relationship between-the operation device 10R and the controller 36 will be only exemplified.

The controller 36 is previously set to function as follows. If the finger of the operator comes into contact with any one of the first to fourth regions 24b to 27b (operation surfaces) on the operation plate 12, the contact is sensed by a touch switch that corresponds to the region coming into contact with the finger. In this case, the controller 36 functions as an external force control unit that controls the actuator 35 such that an external force is applied to the operation plate 12 (operation surface). Specifically, the controller 36 is programmed such that the controller 36 outputs a control signal to operate the actuator 35, when the controller 36 receives the contact signals from the first to fourth touch switches 24a to 27a.

Further, the controller 36 is previously set to function as an illumination control unit to control the first to fourth LEDs 31a to 34a, such that illumination is only made on a region (operation surface) corresponding to a touch switch having sensed the contact of the finger among the first to fourth touch input operation units 24 to 27. Specifically, the controller 36 is programmed such that the controller 36 outputs a control signal to turn on the first LED 31a when the controller 36 receives the contact signal from the first touch switch 24a. In the same manner, the controller 36 is programmed such that the controller 36 outputs a control signal to turn on the second LED 32a when the controller 36 receives the contact signal from the second touch switch 25a, outputs a control signal to turn on the third LED 33a when the controller 36 receives the contact signal from the third touch switch 26a, and outputs a control signal to turn on the fourth LED 34a when the controller 36 receives the contact signal from the fourth touch switch 27a.

That is, the operation of the controller 36 is previously set such that the actuator 35 and the first to fourth illuminating units 31 to 34 function as contact informing units that inform the contact of the fingers to the first to fourth regions 24b to 27b (operation surfaces) on the operation plate 12.

Further, the controller 36 is programmed such that the controller 36 uses a contact signal of two or more contact signals, which indicates a largest contact area, as an effective signal when the controller 36 simultaneously receives the contact signals from two or more touch switches among the first to fourth touch switches 24a to 27a.

Meanwhile, when the left operation device 10L is used as an operation device that operates, for example, an air conditioner, as in the first to fourth regions 24b to 27b shown in Fig. 10, an increase in temperature set value 'TEMPΔ', a decrease in temperature set value 'TEMP∇', an operation of an inner air circulating function 'Rec', and an operation of an outer air introducing function 'Fresh' as operation items of the air conditioner are assigned to the first to fourth touch input operation units 24 to 27, respectively.

As such, the controller 36 is previously set to perform the following processes (1) to (5) by using the first to fourth touch input operation units 24 to 27 and the pressing input operation unit 28, when the operation items of the air conditioner are assigned to the first to fourth touch input operation units 24 to 27. The processes that are performed by the controller 36 will be described without describing contents associated with the control of the first to fourth LEDs 31a to 34a.
(1) When the operator contacts the finger with the first region 24b that becomes an operation surface corresponding to 'TEMPΔ', the controller 36 in a waiting state receives a contact signal from the first touch switch 24a and outputs a control signal to operate the actuator 35. The controller 36 operates the actuator 35 so as to stimulate a tactile sensation of the finger through the operation plate 12, which informs the operator that the first touch switch 24a is selected as an operation target. Then, if the first region 24b is further pressed by the finger of the operator, the holder 9 rocks, and the pushbutton switch 30 is pressed. The controller 36 receives a pressing signal for fixing the input of the first touch switch 24a corresponding to the first region 24b from the pushbutton switch 30, and enters a temperature increase setting mode in which a temperature set value is increased. As the finger of the operator slides while coming into contact with the operation plate 12 so as to cover operation surfaces of the first and second touch input operation units 24 and 25 adjacent to each other, that is, the first and second regions 24b and 25b, when the controller 36 that has entered the temperature increase setting mode continuously receives the contact signals from the first and second touch switches 24a and 25a in the order of the second touch switch 25a and the first touch switch 24a, the controller 36 performs a process for increasing the temperature set value by a predetermined value, for example, by 1°C. Further, even when the controller 36 continuously receives the contact signals from other two touch switches adjacent to each other, the controller 36 performs a process for increasing the temperature set value by 1°C. In the same manner, when the finger of the operator slides while coming into contact with the operation plate 12 so as to cover three or more touch operation input units, the controller 36 performs a process for increasing the temperature set value by an amount corresponding to the number of touch switches according to the slide range.
(2) When the operator contacts the finger with the second region 25b corresponding to 'TEMP∇', the controller 36 in the waiting state receives a contact signal from the second touch switch 25a and outputs a control signal to operate the actuator 35. The controller 36 operates the actuator 35 so as to stimulate a tactile sensation of the finger through the operation plate 12, which informs the operator that the second touch switch 25a is selected as an operation target. Then, if the second region 25b is further pressed by the finger of the operator, the holder 9 rocks, and the pushbutton switch 30 is pressed. The controller 36 receives a pressing signal for fixing the input of the second touch switch 25a corresponding to the second region 25b from the pushbutton switch 30, and enters a temperature decrease setting mode in which a temperature set value is decreased. As the finger of the operator slides while coming into contact with the operation plate 12 so as to cover operation surfaces of the first and second touch input operation units 24 and 25 adjacent to each other, that is, the first and second regions 24b and 25b, when the controller 36 that has entered the temperature decrease setting mode continuously receives the contact signals from the first and second touch switches 24a and 25a in the order of the first touch switch 24a and the second touch switch 25a, the controller 36 performs a process for decreasing the temperature set value by a predetermined value, for example, 1°C. Further, even when the controller 36 continuously receives contact signals from other two touch switches adjacent to each other, the controller 36 performs a process for decreasing the temperature set value by 1°C. In the same manner, when the finger of the operator slides while coming into-contact with the operation plate 12 so as to cover three or more touch input operation units, the controller 36 performs a process for decreasing the temperature set value by an amount corresponding to the number of touch switches according to the slide range.
(3) When the controller 36 receives the pressing signal from the pushbutton switch 30 within a predetermined time after completing the process in the temperature increase setting mode described in the process (1) and within a predetermined time after completing the process in the temperature decrease setting mode described in the process (2), the controller 36 fixes the temperature set value changed in the temperature increase setting mode and the temperature decrease setting mode as an instruction value applied to the air conditioner, outputs an instruction signal corresponding to the instruction value to the air conditioner, and returns to the waiting state.
(4) When the operator contacts the finger with the third region 26b corresponding to 'Rec', the controller 36 in a waiting state receives a contact signal from the third touch switch 26a and outputs a control signal to operate an actuator 35. The controller 36 operates the actuator 35 so as to stimulate a tactile sensation of the finger through the operation plate 12, which informs the operator that the third touch switch 26a is selected as an operation target. Then, if the third region 26b is further pressed by the finger of the operator, the holder 9 rocks, and the pushbutton switch 30 is pressed. The controller 36 receives a pressing signal for fixing the input of the third touch switch 26a corresponding to the third region 26b from the pushbutton switch 30, outputs an instruction signal instructing an operation of an inner air circulating function to the air conditioner, and returns to the waiting state.
(5) When the operator contacts the finger with the fourth region 27b corresponding to 'Fresh', the controller 36 in a waiting state receives a contact signal from the fourth touch switch 27a and outputs a control signal to operate the actuator 35. The controller 36 operates the actuator 35 so as to stimulate a tactile sensation of the finger through the operation plate 12, which informs the operator that the third touch switch 26a is selected as an operation target. Then, if the third region 26b is further pressed by the finger of the operator, the holder 9 rocks, and the pushbutton switch 30 is pressed. The controller 36 receives a pressing signal for fixing the input of the third touch switch 26a corresponding to the third region 26b from the pushbutton switch 30, outputs an instruction signal instructing an operation of an outer air introducing function to the air conditioner, and returns to the waiting state.
   In the processes (1) and (2), the case has been exemplified in which the controller 36 is previously set such that the finger of the operator slides on the operation plate 12 so as to cover the plurality of touch input operation units of the first to fourth touch input operation units 24 to 27, thereby increasing or decreasing the temperature set value. However, as another example, the controller 36 may be previously set such that the operator continuously contacts the finger with the region on the operation plate corresponding to one touch switch many times, thereby increasing or decreasing the temperature set value. Specifically, the controller 36 is previously set such that when the finger of the operator comes into contact with the first region 24b many times to operate the operation item TEMPLΔ', on the basis of the temperature set value at the time of the finger coming into contact with the first region 24b, the temperature set value is increased by a value that is obtained by multiplying the predetermined value by the number of times the finger continuously comes into contact with the first region 24b. For example, when the predetermined value is set to 1°C and the finger continuously comes into contact with the first region 24b three times, on the basis of the temperature set value at this time, the temperature set value is increased by 3°C.
   Further, the controller 36 may be previously set to change the temperature set value when the finger slides on the operation plate 12 so as to cover the plurality of touch switches, and change the temperature set value according to the number of times the finger comes into contact with the region on the operation plate 12 corresponding to one touch switch.
   Furthermore, when the left operation device 10L is selected as the operation device for operating the air conditioner, the right operation device 10R is selected as an operation device for operating the audio equipment. In this case, as in the first to fourth regions 24b to 27b shown in Fig. 11, an increase in volume set value 'VolΔ', a decrease in volume set value 'Vol∇', an selection of an AM radio 'AM', and a selection of an FM radio 'FM' as operation items of the audio equipment, are assigned to the first to fourth touch input operation units 24 to 27, respectively.
   As such, the controller 36 is previously set to perform the following processes (6) to (11), when the operation items of the audio equipment are assigned to the first to fourth touch input operation units 24 to 27.
(6) When the operator contacts the finger with the first region 24b corresponding to 'VolΔ', the controller 36 in a waiting state receives a contact signal from the first touch switch 24a and outputs a control signal to operate the actuator 35. The controller 36 operates the actuator 35 so as to stimulate a tactile sensation of the finger through the operation plate 12, which informs the operator that the first touch switch 24a is selected as an operation target. Then, if the first region 24b is further pressed by the finger of the operator, the holder 9 rocks, and the pushbutton switch 30 is pressed. The controller 36 receives a pressing signal for fixing the input of the first touch switch 24a corresponding to the first region 24b from the pushbutton switch 30, and enters a volume increase setting mode in which a volume set value is increased. As the finger of the operator slides while coming into contact with the operation plate 12 so as to cover operation surfaces of the first and second touch input operation units 24 and 25 adjacent to each other, that is, the first and second regions 24b and 25b, when the controller 36 that has entered the volume increase setting mode continuously receives the contact signals from the first and second touch switches 24a and 25a in the order of the second touch switch 25a and the first touch switch 24a, the controller 36 performs a process for increasing the volume set value by a predetermined value. Further, even when the controller 36 continuously receives contact signals from other two touch switches adjacent to each other, the controller 36 performs a process for increasing the volume set value by a predetermined value. In the same manner, when the finger of the operator slides while coming into contact with the operation plate 12 so as to cover three or more touch input operation units, the controller 36 performs a process for increasing the volume by an amount corresponding to the number of touch switches according to the slide range.
(7) When the operator contacts the finger with the second region 25b corresponding to 'Vol∇', the controller 36 in a waiting state receives a contact signal from the second touch switch 25a and outputs a control signal to operate the actuator 35. The controller 36 operates the actuator 35 so as to stimulate a tactile sensation of the finger through the operation plate 12, which informs the operator that the second touch switch 25a is selected as an operation target. Then, if the second region 25b is further pressed by the finger of the operator, the holder 9 rocks, and the pushbutton switch 30 is pressed. The controller 36 receives a pressing signal for fixing the input of the second touch switch 25a corresponding to the second region 25b from the pushbutton switch 30, and enters a volume decrease setting mode in which a volume set value is decreased. As the finger of the operator slides while coming into contact with the operation plate 12 so as to cover operation surfaces of the first and second touch input operation units 24 and 25 adjacent to each other, that is, the first and second regions 24b and 25b, when the controller 36 that has entered the volume decrease setting mode continuously receives the contact signals from the first and second touch switches 24a and 25a in the order of the first touch switch 24a and the second touch switch 25a, the controller 36 performs a process for decreasing the volume set value by a predetermined value. Further, even when the controller 36 continuously receives contact signals from other two touch switches adjacent to each other, the controller 36 performs a process for decreasing the volume set value by the predetermined value. In the same manner, when the finger of the operator slides while coming into contact with the operation plate 12 so as to cover three or more touch input operation units, the controller 36 performs a process for decreasing the volume by an amount corresponding to the number of touch switches according to the slide range.
(8) When the controller 36 receives the pressing signal from the pushbutton switch 30 within a predetermined time after completing the process in the volume increase setting mode described in the process (6) and within a predetermined time after completing the process in the volume decrease setting mode described in the process (7), the controller 36 fixes the volume set value changed in the volume increase setting mode and the volume decrease setting mode as an instruction value applied to the audio equipment, outputs an instruction signal corresponding to the instruction value to the audio equipment, and returns to the waiting state.
(9) When the controller 36 in a waiting state receives a contact signal from the third touch switch 26a, the controller 36 outputs an instruction signal instructing to operate the AM radio to the audio equipment.
(10) When the controller 36 in a waiting state receives a contact signal from the fourth touch switch 27a, the controller 36 outputs an instruction signal instructing to operate the FM radio to the audio equipment.
(11) After outputting the instruction signal instructing to operate any one of the AM radio and the FM radio, if the controller 36 receives the pressing signal from the pushbutton switch 30 while the radio is operating, the controller 36 outputs an instruction signal instructing to switch a broadcasting station to the audio equipment.

In the processes (6) and (7), the case has been exemplified in which the controller 36 is previously set such that the finger of the operator slides on the operation plate 12 so as to cover the plurality of touch input operation units of the first to fourth touch input operation units 24 to 27, thereby increasing or decreasing the volume set value. However, as another example, the controller 36 may be previously set such that the operator continuously contacts the finger with the region on the operation plate 12 corresponding to one touch switch many times, thereby increasing or decreasing the volume set value. Specifically, when the finger continuously comes into contact with the first region 24b corresponding to 'VolΔ' many times, on the basis of the volume set value at the time of the finger coming into contact with the first region 24b, the volume set value can be increased according to the number of times the finger comes into contact with the first region 24b. For example, when the finger of the operator continuously comes into contact with the first region 24 three times, on the basis of the volume set value at this time, the volume set value can be increased by three times the predetermined value.

Further, the controller 36 may be previously set to change the volume set value when the finger slides on the operation plate 12 so as to cover the plurality of touch input operation units of the first to fourth touch input operation units 24 to 27, and change the volume set value according to the number of times the finger comes into contact with the region on the operation plate 12 corresponding to one touch switch.

Further, the controller 36 is not limited to the above-described control operations but can perform various control operations according to input operations. For example, if the controller 36 receives the contact signal from the first touch switch 24a in the process (1), the controller 36 immediately enters a temperature increase setting mode so as to increase the temperature set value, thereby enabling the set temperature to be increased or decreased according to the slide operation.

According to this embodiment, the following effects can be obtained.

In this embodiment, the switch device can include the operation plate 12 having the first to fourth regions 24b to 27b (operation surfaces) which the operator contacts fingers with so as to perform a switch operation, the wiring film 13 (wiring body) that are provided with the first to fourth capacitive touch switches 24a to 27a (touch switches) so as to correspond to the first to fourth regions 24b to 27b on the back surface of the operation plate 12, the supporting portions 29a and 29b and the holding portion 2c (rocking supporting mechanism) that rotatably support the holder 29 holding the operation plate 12 such that the other end of the operation plate 12 rocks when the operation surfaces are pressed, and the pushbutton switch 30 that comes into contact with or operates in response to the holder 29 rocking when the operation plate 12 is pressed and outputs the pressing signals to fix input of the touch switches corresponding to the operation surfaces that come into contact with the fingers of the operator. Therefore, one wiring body 13 and one pushbutton switch 30 can form the switch device. Further, it is possible to achieve a switch device having the small size and low cost, even when the number of switches is increased. Furthermore, since the switch structure is simple, an arrangement space can be easily ensured, and a degree of freedom in design can be improved.

In this embodiment, the first to fifth elongated protrusions 12a to 12e are provided on the operation plate 12 to partition the first to fourth regions 24b to 27b, and the protrusions 12f to 121 are provided to discriminate regions among the first to fifth elongated protrusions 12a to 12e. Therefore, the operation can recognize the regions among the plurality of regions which the operator contacts the fingers with, and can perform a blind touch operation.

In this embodiment, the actuator 35 that applies an external force to the first to fourth regions 24b to 27b is provided in the holder 29. Therefore, it is possible to stimulate a tactile sensation of the finger that comes into contact with any one of the first to fourth regions 24b to 27b, which can inform the operator of a region among the first to fourth regions 24b to 27b on which the touch switch is turned on. Accordingly, it is possible to surely perform a blind touch operation.

In this embodiment, each of the operation plate 12 and the wiring film 13 is made of a light transmitting material, and the holder 29 has first to fourth tubular cavity portions 31b to 34b that are made of a light shielding material and correspond to the first to fourth regions 24b to 27b, and the first to fourth LEDs 31a to 34a (light emitting elements) are provided to correspond to the first to fourth tubular cavity portions 31b to 34b. Therefore, the operation surface that comes into contact with the finger of the operator can be only illuminated. In particular, even when the operator does not experience the blind touch operation or performs an operation in a dark state, the operation can visually recognize a region among the first to fourth regions 24b to 27b on which the touch switch is turned on.

In this embodiment, the switch device further has a controller 36 that receives the contact signals and the pressing signals or outputs the control signals or the instruction signals. When the controller 36 receives the contact signals, the controller 36 operates the actuator 35 and makes the first to fourth LEDs 31a to 34a emit light. In addition, when the controller 36 receives the pressing signals, the controller 36 outputs the instruction signals to fix input of the touch switches corresponding to the operation surfaces that come into contact with the fingers of the operator. Therefore, it is possible to achieve a switch device in which a structure is simple and an operation can be surely performed.

In this embodiment, the switch device is provided in a steering wheel 1, the steering wheel 1 includes the pad portion 2 and the grasping portions 3L and 3R that extend from the pad portion 2 and has the openings 4L and 4R formed between the pad portion 2 and the grasping portions 3L and 3R, and the supporting portions 29a and 29b and the holding portion 2c (rocking supporting mechanism) that rotatably support the holder 29 are provided at the side of the pad portion 2 such that one end of the operation plate 12 is disposed on the sides of the grasping portions 3L and 3R. Therefore, one wiring body and one pressing switch can form a switch device. For example, it is possible to achieve a steering switch device that has the small size and low cost, even when the number of switches is increased. Further, since the steering switch device uses a structure where the wiring film 13 (wiring body) that are provided with the first to fourth capacitive touch switches 24a to 27a are included in the operation plate 12, it is possible to achieve a steering switch device that is suitable for various designs of the steering wheel that has a three-dimensional curved surface. Furthermore, since the portions close to the openings on the operation surfaces are pressed by the fingers of the operator, a blind touch operation, a slide operation over a plurality of operation surfaces, and an operation plate pressing operation can be easily performed by the fingers of hands of the operator grasping the grasping portions 3L and 3R, which improves operability.

In this embodiment, the pair of holding portions 2c and 2d are flexible, and the shafts 2a and 2b provided in the holding portions 2c and 2d engage with the holes 29e and 29f provided in the pair of supporting portions 29a and 29b to freely rotate. Therefore, it is possible to achieve a steering wheel device that can be easily assembled.

## Claims

1. A switch device comprising:
an operation plate (12) that has a plurality of operation surfaces (24b, 25b, 26b, 27b) which an operator contacts fingers with so as to perform a switching operation;
a wiring body (13) that has a plurality of capacitive touch switches (24a, 25a, 26a, 27a), the plurality of capacitive touch switches provided to correspond to the plurality of operation surfaces (24b, 25b, 26b, 27b) on a back surface of the operation plate (12), sensing that the operation surfaces (24b, 25b, 26b, 27b) come into contact with the fingers of the operator, and outputting contact signals;
a rocking supporting mechanism that rotatably supports the operation plate (12) or a holder (29) holding the operation plate (12) at one end side of the operation plate (12), such that the other end of the operation plate (12) rocks when the operation surfaces (24b, 25b, 26b, 27b) are pressed; and
a pushbutton switch (30) that comes into contact with and operates in response to the operation plate (12) or the holder (29) rocking when the operation surfaces (24b, 25b, 26b, 27b) are pressed, and outputs pressing signals fixing input of the capacitive touch switches (24a, 25a, 26a, 27a) corresponding to the operation surfaces (24b, 25b, 26b, 27b) that come into contact with the fingers of the operator.

2. The switch device according to claim 1,
**characterized in that** grooves or protrusions (12a, 12b, 12c, 12d, 12e), which partition the plurality of operation surfaces (24b, 25b, 26b, 27b), are provided on the operation plate (12), and
concave portions or convex portions (12f, 12g, 12h, 12i, 12j, 12k, 121) are provided so as to discriminate the plurality of operation surfaces (24b, 25b, 26b, 27b) among the grooves or the protrusions.

3. The switch device according to claim 1 or 2,
**characterized in that** an external force applying unit (35) that applies an external force to the plurality of operation surfaces (24b, 25b, 26b, 27b) is provided in the operation plate (12) or the holder (29).

4. The switch device according to claim 1 or 2, **characterized in that** the operation plate (12) and the wiring body (13) are made of a light transmitting material,
the holder (29) has a plurality of tubular cavity portions (31b, 32b, 33b, 34b) that are made of a light shielding material and face the plurality of operation surfaces (24b, 25b, 26b, 27b), and
light emitting elements (31a, 32a, 33a, 34a) are provided to face the plurality of tubular cavity portions (31b, 32b, 33b, 34b).

5. The switch device according to claim 3,
**characterized in that** the operation plate (12) and the wiring body (13) are made of a light transmitting material,
the holder (29) has a plurality of tubular cavity portions (31b, 32b, 33b, 34b) that are made of a light shielding material and face the plurality of operation surfaces (24b, 25b, 26b, 27b), and
light emitting elements (31a, 32a, 33a, 34a) are provided to face the plurality of tubular cavity portions (31b, 32b, 33b, 34b).

6. The switch device according to claim 3, further comprising: a control unit (36) that receives the contact signals and/or the pressing signals and outputs control signals or instruction signals,
**characterized in that** when the control unit (36) receives the contact signals, the control unit outputs control signals to operate the external force applying unit (35), and when the control unit (36) receives the pressing signals, the control unit (36) outputs instruction signals to fix input of the touch switches (24a, 25a, 26a, 27a) corresponding to the operation surfaces (24b, 25, 26b, 27b) coming into contact with the fingers of the operator.

7. The switch device according to claim 4, further comprising: a control unit (36) that receives the contact signals and/or the pressing signals and outputs control signals or instruction signals,
**characterized in that** when the control unit (36) receives the contact signals, the control unit (36) outputs to the light emitting elements (31a, 32a, 33a, 34a), control signals making the light emitting elements (31a, 32a, 33a, 34a) emit light, and when the control unit (36) receives the pressing signals, the control unit (36) outputs instruction signals to fix input of the touch switches (24a, 25a, 26a, 27a) corresponding to the operation surfaces (24b, 25b, 26b, 27b) coming into contact with the fingers of the operator.

8. The switch device according to claim 5, further comprising: a control unit (36) that receives the contact signals and/or the pressing signals and outputs control signals or instruction signals,
**characterized in that** when the control unit (36) receives the contact signals, the control unit (36) outputs control signals to operate the external force applying unit (35) and/or control signals making the light emitting elements (31a, 32a, 33a, 34a) emit light to the external force applying unit (35) and/or the light emitting elements (31a, 32a, 33a, 34a), and when the control unit (36) receives the pressing signals, the control unit (36) outputs instruction signals to fix input of the touch switches (24a, 25a, 26a, 27a) corresponding to the operation surfaces (24b, 25b, 26b, to 27b) coming into contact with the fingers of the operator.

9. A steering switch device,
**characterized in that** the switch device according to one of the preceding claims is used as the steering switch device and is provided in a steering wheel (1),
the steering wheel (1) includes a pad portion (2) and grasping portions (3L, 3R) that extend from the pad portion (2) and have openings (4L, 4R) formed between the pad portion (2) and the grasping portions (3L, 3R), and
the rocking supporting mechanism is provided at the pad portion (2) side such that the operation plate (12) at the grasping portion side rocks on the basis of the pad portion (2) side.

10. The steering switch device according to claim 9,
**characterized in that** the rocking supporting mechanism includes a pair of flexible holding portions (2c, 2d) that are provided in the pad portion (2) and a pair of supporting portions (29a, 29b) that are provided in the holder (29), and
shafts (2a, 2b) or holes provided in the holding portions (2c, 2d) engage with holes (29e, 29f) or shafts provided in the supporting portions (29a, 29b) to freely rotate.
